# EUROPEAN PATENT APPLICATION

(11) **EP 4 535 323 A2**
(43) Date of publication of application: **09.04.2025**
(21) Application number: 24203892.5
(22) Date of filing: 01.10.2024
(51) Int. Cl.: G08B 29/04

(54) **A TAMPER-PROOF SENSOR ASSEMBLY**

(30) Priority: 02.10.2023 US 202363587188 P
(71) Applicant: Carrier Corporation, Palm Beach Gardens, FL 33418 (US)
(72) Inventor: LEWANDOWSKA, Alicja, 80-890 Gdansk Pomeranian (PL)
(74) Representative: Dehns

(57) **Abstract**

A wall mount (101) for a tamper-proof sensor assembly (100) includes a wall plate housing (102) adapted to be removably mounted to a wall. The wall plate housing (102) includes at least one runner plate (103) disposed in a cutaway portion of the wall plate housing (102) and connected to the wall plate housing (102) using at least one frangible bridge (102a). Moreover, the at least one runner plate (103) is affixed to the wall, such that upon exertion of a dismantling force on the wall plate housing (102), the at least one frangible bridge (102a) is adapted to break to separate the wall plate housing (102) from the at least one runner plate (103) such that the at least one runner plate (103) remains affixed to the wall.

## Description

### CROSS REFERENCE TO RELATED APPLICATION

This application claims the benefit of U.S. Provisional Patent Application No. 63/587,188 filed on October 02, 2023, which is incorporated by reference herein in its entirety.

### FIELD OF THE INVENTION

**The** invention generally relates to sensor assemblies. More particularly, the invention relates to a tamper-proof sensor assembly.

### BACKGROUND

Surveillance sensor systems are pivotal in contemporary security and monitoring applications across residential, commercial, industrial, and critical infrastructure settings. These systems are deployed to detect unauthorized access, monitor environmental conditions, and ensure the safety and security of assets and individuals.

To bolster the reliability and effectiveness of surveillance sensor systems, tamper-proof mechanisms have been developed and integrated into various sensor types. Tamper-proof sensors are engineered to detect and respond to any attempts to manipulate or disable the sensors or their associated equipment. However, despite their crucial role, current tamper-proof mechanisms exhibit notable drawbacks that can compromise the overall functionality and performance of surveillance systems, potentially leading to diminished security and increased operational costs.

One major drawback of tamper-proof mechanisms for surveillance sensors is that existing tamper-proof mechanisms are prohibitively expensive to implement. These expenses in addition to procurement of specialized sensors, control units, and the professional expertise requisite for installation of these systems increase costs. Consequently, the cost factor deters small enterprises or individuals from establishing robust surveillance systems, leaving vulnerabilities unaddressed.

Another drawback of tamper-proof mechanisms is that the installation of tamper-proof sensors is often intricate, necessitating specialized knowledge and skills. Professional expertise is typically indispensable to ensure accurate placement, wiring, and calibration of these sensors. The complexity of installation not only contributes to increased costs but also extends deployment timelines, posing challenges in time-sensitive security applications.

Another drawback of existing tamper-proof mechanisms for sensor assemblies are their susceptibility to triggering false alarms. Environmental factors such as wind induced vibrations, temperature fluctuations, or accumulation of dust particles may trigger false alarms in tamper-proof mechanisms that do not account for the environmental factors during the design or development phase. False alarms unnecessarily cause time wastage and may desensitize security personnel to legitimate alarms thereby reducing the efficacy of a surveillance system.

The integration of tamper-proof mechanisms into existing sensor assemblies may prove complex. This is especially true when the components of such sensor assemblies are sourced from multiple manufacturers. Compatibility issues can render the sensor assembly useless due to malfunctioning components. Such compatibility issues may also increase the vulnerability of the sensor assemblies to exploitation from determined intruders. Consequently, the vulnerabilities may raise apprehensions regarding the reliability of the surveillance sensor system.

Therefore, improved tamper-proof sensor assemblies that overcome the limitations in existing tamper-proof mechanisms are desired.

### SUMMARY

This summary is provided to introduce a selection of concepts in a simplified format that are further described in the detailed description herein. This summary is not intended to identify key or essential inventive concepts of the invention, nor is it intended for determining the scope of the invention, which is as set out in the appended claims.

According to a first aspect of the invention there is provided a wall mount for a tamper-proof sensor assembly. The wall mount includes a wall plate housing adapted to be removably mounted to a wall. The wall plate housing includes at least one runner plate disposed in a cutaway portion of the wall plate housing and connected to the wall plate housing using at least one frangible bridge. Moreover, the at least one runner plate is affixed to the wall such that upon exertion of a dismantling force on the wall plate housing, the at least one frangible bridge is adapted to break to separate the wall plate housing from the at least one runner plate such that the at least one runner plate remains affixed to the wall.

Optionally, a rear housing of the tamper-proof sensor assembly is adapted to be mounted on the wall mount.

Optionally, the rear housing of the tamper-proof sensor assembly is rotatable relative to the wall mount.

Optionally, the at least one runner plate has an arcuate outer profile.

Optionally, the at least one runner plate is disposed in the cutaway portion of the wall plate housing such that at least one tamper arm of the tamper-proof sensor assembly engages a portion of the arcuate outer profile of the at least one runner plate.

Optionally, the at least one runner plate is disposed symmetrically about a central axis (X-X') passing through the wall mount.

Optionally, the at least one runner plate is disposed asymmetrically about the central axis (X-X') passing through the wall mount.

Optionally, at least one of the wall plate housing, the at least one frangible bridge, and the at least one runner plate are made of a plastic material.

According to a second aspect of the invention there is provided a tamper-proof sensor assembly including a wall mount, a rear housing, and a front housing. The wall mount includes a wall plate housing adapted to be removably mounted to a wall. The wall plate housing includes at least one runner plate disposed in a cutaway portion of the wall plate housing and connected to the wall plate housing using at least one frangible bridge, the at least one runner plate affixed to the wall. The rear housing is adapted to be mounted on the wall mount such that the tamper-proof sensor assembly is rotatable relative to the wall mount. The front housing is removably attached to the rear housing to enclose at least one tamper arm and control circuitry including at least one tamper switch. Upon assembling the tamper-proof sensor assembly, a first end of the at least one tamper arm is adapted to engage the at least one tamper switch and a second end of the at least one tamper arm is adapted to engage the at least one runner plate. Upon tampering with the assembled tamper-proof sensor assembly, the at least one tamper arm disengages from the at least one tamper switch to trigger a notification generated by the control circuitry.

Optionally, upon exertion of a dismantling force on the wall plate housing, the at least one frangible bridge is adapted to break to separate the wall plate housing from the at least one runner plate such that the at least one runner plate remains affixed to the wall.

Optionally, the first end of the at least one tamper arm includes a slot adapted to seat the at least one tamper switch and the second end of the at least one tamper arm protrudes from a portion of the rear housing to engage the at least one runner plate.

Optionally, upon rotation of the tamper-proof sensor assembly, the second end of the at least one tamper arm engages an arcuate outer profile of the at least one runner plate from a first end to a second end of the at least one runner plate and vice versa.

Optionally, upon assembling the tamper-proof sensor assembly, the at least one tamper arm is inclined at an angle relative to the vertical axis (Y-Y').

Optionally, the at least one runner plate is disposed symmetrically about a central axis (X-X') passing through the wall mount.

Optionally, the at least one runner plate is disposed asymmetrically about the central axis (X-X') passing through the wall mount.

Optionally, at least one of the wall plate housing, the at least one frangible bridge, the at least one runner plate, the rear housing, and the front housing are made of a plastic material.

Optionally, the notification is at least one of an audio notification, a visual notification, and an audio-visual notification.

**To** further clarify the advantages and features of the method and system, a more particular description of the method and system will be rendered by reference to specific embodiments thereof, which is illustrated in the appended drawings. It is appreciated that these drawings depict only typical embodiments of the invention and are therefore not to be considered limiting its scope, which is as set out in the appended claims. Embodiments of the invention will be described and explained with additional specificity and detail with the accompanying drawings.

### BRIEF DESCRIPTION OF THE DRAWINGS

These and other features, aspects, and advantages will become better understood when the following detailed description is read with reference to the accompanying drawings in which like characters represent like parts throughout the drawings. Certain exemplary embodiments will now be described in greater detail by way of example only and with reference to the accompanying drawings in which:
**Figure 1A** illustrates a perspective view of a wall mount for a tamper-proof sensor assembly;
**Figure 1B** illustrates a planar front view of the wall mount;
**Figure 2A** illustrates an exploded view of the tamper-proof sensor assembly;
**Figure 2B** illustrates a front perspective view of a tamper arm adapted to engage with the runner plate of the wall mount;
**Figure 2C** illustrates an assembled view of the tamper-proof sensor assembly;
**Figure 3A** illustrates a top sectional view of the tamper-proof sensor assembly;
**Figure 3B** illustrates a top sectional view of the tamper-proof sensor assembly rotating in a first direction; and
**Figure 3C** illustrates a top sectional view of the tamper-proof sensor assembly rotating in a second direction.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

**The** terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Embodiments of the invention will be described below in detail with reference to the accompanying drawings.

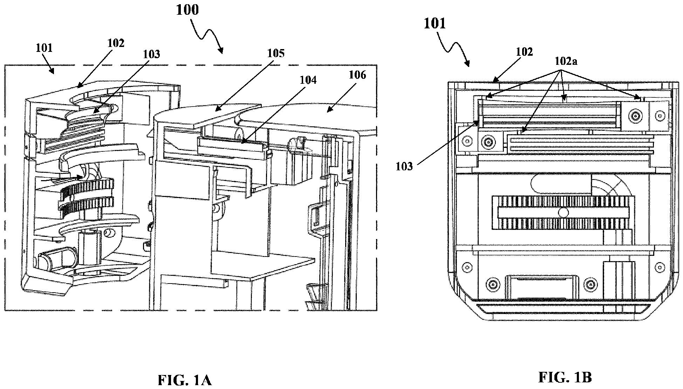

**Figure 1A** illustrates a perspective view of a wall mount 101 for a tamper-proof sensor assembly 100. **Figure 1B** illustrates a planar front view of the wall mount 101. The tamper-proof sensor assembly 100 may function as part of a surveillance system. The tamper-proof sensor assembly 100 may house one or more sensors and their associated control circuitry and power sources. The one or more sensors may include, but are not limited to, image processing sensors, motion sensors, thermal imaging sensors, temperature sensors, humidity sensors, infra-red sensors, smoke and heat sensors, etc.

The motion sensors may be classified into active motion sensors and passive motion sensors. Active motion sensors may emit radio frequency in the microwave region and analyze the returned or reflected microwave frequency for determining motion. Alternatively, passive motion sensors may trigger an alarm upon detecting human beings or animals and may be installed outside a region or building being monitored. The human or animal body radiates energy in the form of infrared radiation. Hence, when humans or animals come in the range of the passive motion sensor, the passive motion sensor receives thermal energy and hence motion is detected by the passive motion sensor, also known as passive infrared sensor.

The motion sensors may be embodied as ultrasonic sensors. The ultrasonic sensors may use ultrasonic frequency waves for their operation and typically consists of a transmitter and a receiver. The transmitter converts electrical energy into sound waves and transmits the sound waves. The receiver part receives the echo and turns the received sound waves into electrical energy to determine the distance of a target object from the ultrasonic sensor. Hence it is also known as a distance sensor.

The motion sensors may be implemented as tomographic sensors. Tomographic sensors emit radio frequency waves and sense disturbances to these radio waves as they pass between nodes of a mesh network. The radio waves penetrate through walls and other obstructions and hence can work efficiently over larger coverage areas thereby having increased utility for warehouses and large storage areas.

The one or more sensors may also include wireless sensors that use wireless standards such as RFID, Wi-Fi, Bluetooth, NFC, ZigBee, Zwave, etc., for their operation. These sensors may use one or more of these standards for communication. The security systems designed using wireless sensors may be monitored and controlled using applications installed on smartphones. These applications can monitor doors, windows, surveillance cameras, lights, smoke, sirens, etc.

The one or more sensors may also include chemical sensors that transform chemical information (such as composition, element/ion presence, concentration, partial pressure, chemical activity etc.) into an analytically useful signal. The chemical sensors may contain two components which are connected in series, for example, chemical (molecular) recognition system (i.e., receptor) and physicochemical transducer. In major chemical sensors, the receptor interacts with analyte molecules. These sensors are used in various fields such as medicine, environmental pollution, home safety, and so on. They are also used to detect organic compounds present in gases. Some of these chemical sensors find different applications such as radio frequency detection, sensing toxic materials, toxic vapors, bomb detection, chemical agent simulants, etc.

The one or more sensors may also include magnetic sensors classified based on their measurement. For example, the magnetic sensors may measure magnetic flux density in a specific direction or measure total strength of a magnetic field. They are used for the detection of ferromagnetic and conducting objects, navigation, position tracking, linear/angular position, and rotation sensing and in anti-theft systems. Magnetic sensors are developed based on various technologies such as coil, fluxgate, SQUID, hall effect, optically pumped, nuclear precession, giant magnetoresistance, anisotropic magneto resistance, giant magneto impedance, piezoelectric composites etc.

The wall mount 101 of the tamper-proof sensor assembly 100 may include a wall plate housing 102 adapted to be removably mounted to a wall. Although, the wall mount 101 is described as affixed to a flat surface of a wall, it will be appreciated the wall mount 101 may alternatively be removably mounted to a corner portion defined by adjacent walls. In yet another embodiment, the wall mount 101 may be affixed to the wall such that a primary portion of the wall mount 101 is affixed to the wall while a remaining minor portion of the wall mount 101 extends beyond the wall without being affixed to the wall. Several such configurations of the wall mount 101 may be envisioned without departing from the scope of this invention, which is as set out in the appended claims.

The wall plate housing 102 includes at least one runner plate 103 disposed in a cutaway portion of the wall plate housing 102 and connected to the wall plate housing 102 using at least one frangible bridge 102a. Moreover, the at least one runner plate 103 is affixed to the wall. Upon exertion of a dismantling force on the wall plate housing 102, the at least one frangible bridge 102a is adapted to break to separate the wall plate housing 102 from the at least one runner plate 103 such that the at least one runner plate 103 remains affixed to the wall. At least one of the wall plate housing 102, the at least one frangible bridge 102a, and the at least one runner plate 103 may be made of a plastic material.

A rear housing 105 of the tamper-proof sensor assembly 100 is adapted to be mounted on the wall mount 101. The rear housing 105 of the tamper-proof sensor assembly 100 is rotatable relative to the wall mount 101. The at least one runner plate 103 has an arcuate outer profile. The at least one runner plate 103 is disposed in the cutaway portion of the wall plate housing 102 such that at least one tamper arm 104 of the tamper-proof sensor assembly 100 engages a portion of the arcuate outer profile of the at least one runner plate 103.

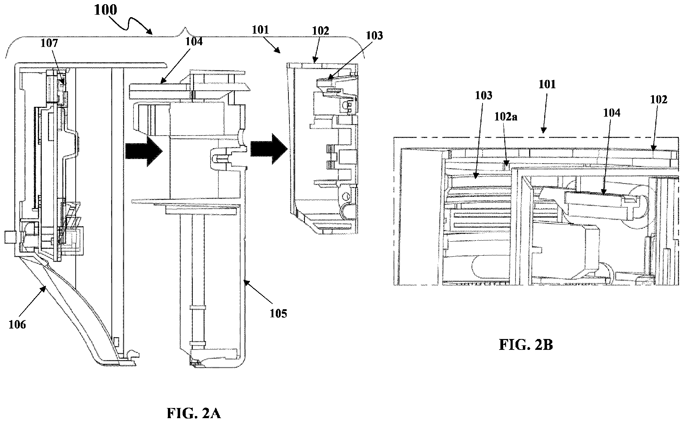

**Figure 2A** illustrates an exploded view of the tamper-proof sensor assembly 100. The tamper-proof sensor assembly 100 includes the wall mount 101, the rear housing 105, and the front housing 106. The front housing 106 is removably attached to the rear housing 105 to enclose the at least one tamper arm 104 and control circuitry comprising at least one tamper switch 107. The wall mount 101 includes the wall plate housing 102 having the at least one runner plate 103 affixed to the wall as disclosed in the detailed description of **Figures 1A-1B****.** The rear housing 105 is adapted to be mounted on the wall mount 101 such that the tamper-proof sensor assembly 100 is rotatable relative to the wall mount 101 and the front housing 106 is removably attached to the rear housing 105. 16. At least one of the wall plate housing 102, the at least one frangible bridge 102a, the at least one runner plate 103, the rear housing 105, and the front housing 106 are made of a plastic material. Moreover, the plastic material may be manufactured using an injection molding process or a conventional 3-d printing process.

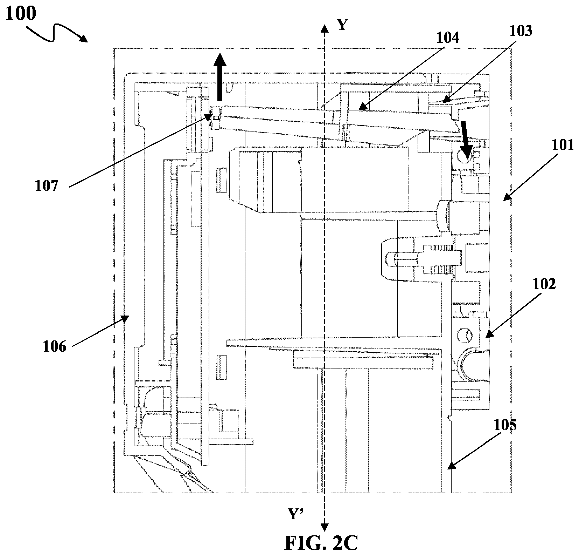

**Figure 2B** illustrates a front perspective view of a tamper arm 104 adapted to engage with the runner plate 103 of the wall mount 101. The first end of the at least one tamper arm 104 includes a slot adapted to seat the at least one tamper switch 107 shown in **Figures 2A** and **2C****.** Moreover, the second end of the at least one tamper arm 104 protrudes from a portion of the rear housing 105 to engage the at least one runner plate 103.

**Figure 2C** illustrates an assembled view of the tamper-proof sensor assembly 100. Upon assembling the tamper-proof sensor assembly 100, a first end of the at least one tamper arm 104 is adapted to engage the at least one tamper switch 107 and a second end of the at least one tamper arm 104 is adapted to engage the at least one runner plate 103. Moreover, upon assembling the tamper-proof sensor assembly 100, the at least one tamper arm 104 is inclined at an angle relative to the vertical axis (Y-Y'). Upon tampering with the assembled tamper-proof sensor assembly 100, the at least one tamper arm 104 disengages from the at least one tamper switch 107 to trigger a notification generated by the control circuitry.

As used herein, the term "tampering with the assembled tamper-proof sensor assembly 100" may refer to removal of the front housing 106, removal of the rear housing 105, forcible removal of the wall mount 101 from the wall. The removal of the front housing 106, the rear housing 105, and the wall mount 101 may be completed using tools or by using the bare hands of an intruder who wishes to deactivate the tamper-proof sensor assembly 100. As described earlier in the detailed description of **Figures 1A-1B****,** upon exertion of a dismantling force on the wall plate housing 102, the at least one frangible bridge 102a is adapted to break to separate the wall plate housing 102 from the at least one runner plate 103 such that the at least one runner plate 103 remains affixed to the wall. Since the at least one runner plate 103 remains on the wall, the at least one tamper arm 104 does not receive the pushing force from the at least one runner plate 103 for engaging with the at least one tamper switch 107. This means, the at least one tamper arm 104 disengages from the at least one tamper switch 107 to trigger the notification generated by the control circuitry. The notification is at least one of an audio notification, a visual notification, and an audio-visual notification. The notification may be an emergency SOS signal beamed to a server associated with security personnel.

The audio notification may include a loud warning siren or alarm which may be generated for a continuous or periodic interval of time. The audio notification may be configured to be cleared or switched off based on an input received via the tamper-proof sensor assembly 100 or a computing device connected to the tamper-proof sensor assembly 100, after which time the computing device resumes to a normal indication without the emergency audio notification. The input may include an input received via a haptic interface of the computing device, an ON/OFF switch, biometric/RFID authentication by authorized security or safety personnel, etc. This means the audio notification provides the alert continuously to the operator of the computing device until the operator shuts off the notification. The computing device may generate a visual notification in addition to the audio notification via a display interface of the computing device.

The display may comprise suitable logic, circuitry, interfaces, and/or code that may be configured to render diverse types of information and/or entertainment content via a user interface. The display may be a flashing visual indicator, such as a Light Emitting Diode (LED), indicator lights, or the like. The user interface may be a customized Graphic User Interface (GUI) configured to display information such as the location of the compromised tamper-proof sensor assembly 100, number of damaged tamper-proof sensor assemblies 100, etc. The display may include but is not limited to a projection-based display, an electro-chromic display, a flexible display, and/or holographic display. The display may be a touchscreen display, a tactile electronic display, and/or a touchable hologram. As such, the display may be configured to receive inputs from the operator for setting or modifying the predefined criteria, the predefined intervals, etc. The authorized personnel/operator may be prompted to clear the audio or visual notification. Alternately, the audio notification, the visual notification, or the audio-visual notification is configured to stop only based on an input received from the operator via the computing device. Consequently, the computing device configures the audio interface and/or the display interface to return to a normal indication mode.

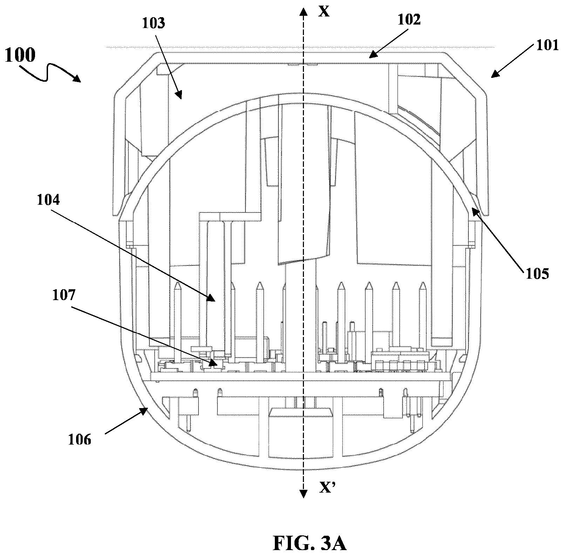

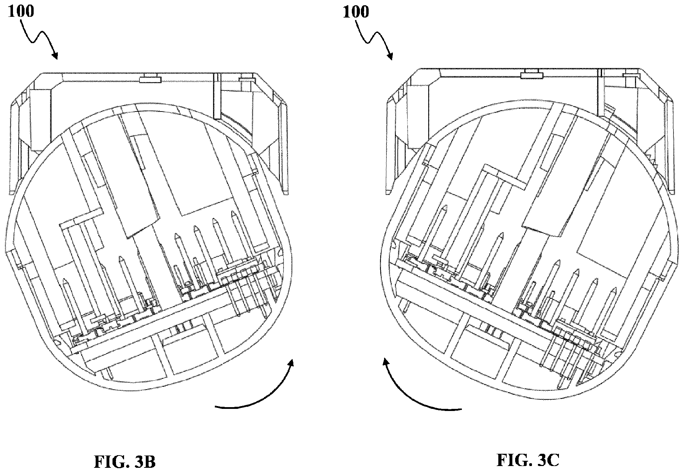

**Figure 3A** illustrates a top sectional view of the tamper-proof sensor assembly 100. **Figure 3B** illustrates a top sectional view of the tamper-proof sensor assembly 100 rotating in a first direction, for example an anti-clockwise direction. **Figure 3C** illustrates a top sectional view of the tamper-proof sensor assembly 100 rotating in a second direction, for example, a clockwise direction. During rotation of the tamper-proof sensor assembly 100, the second end of the at least one tamper arm 104 engages an arcuate outer profile of the at least one runner plate 103 from a first end to a second end of the at least one runner plate 103 and vice versa. The at least one runner plate 103 is disposed asymmetrically about the central axis (X-X') passing through the wall mount 101 as shown in **Figures 3A-3C****.** It may be appreciated that although the at least one runner plate 103 is shown as being disposed asymmetrically about the central axis (X-X'), in certain implementations, the at least one runner plate 103 may be disposed symmetrically about the central axis (X-X') passing through the wall mount 101 without departing from the scope of the invention, which is as set out in the appended claims.

The tamper-proof sensor assembly 100, disclosed herein, is a mechanical solution designed as a part of an enclosure or housing of the tamper-proof sensor assembly 100. Advantageously, the arcuate outer profile of the at least one runner plate provides pressure to the at least one tamper arm 104 during the rotation of the rear housing 105 and the front housing 106. Since the at least one tamper arm 104 integrated with the middle part of the rear housing 105 and the front housing 106 is designed to be slightly elastic, any additional parts such as springs, moving elements, etc., are eliminated. During assembly, the at least one tamper arm 104 is engaged with the at least one runner plate 103 at one end and the at least one tamper switch 107 at a second end such that the at least one tamper arm 104 is inclined at an angle greater than zero. If the rear housing 105 or the front housing 106 are removed or the wall mount 101 is physically removed using tools, the at least one tamper arm 104 stops exerting a force on the at least one tamper switch 104 and an alarm is triggered. This feature reduces the number of components and complexity of installation or implementation of the solution.

Moreover, since at least one of the wall plate housing 102, the at least one frangible bridge 102a, the at least one runner plate 103, the rear housing 105, and the front housing 106 are made of a plastic material manufactured using an injection molding process or a conventional 3-d printing process, the cost of implementation is reduced, and the solution is inexpensive and convenient to implement.

**A** plurality of tamper-proof sensor assemblies 100 may be installed within a region under surveillance. The control circuitry may be integrated as a part of a surveillance system including the plurality of tamper-proof sensor assemblies 100. The control circuitry may be remote from the tamper-proof sensor assemblies 100 or integrated as a part of the tamper-proof sensor assemblies 100. The tamper-proof sensor assemblies 100 may be installed to detect motion, thermal images, images, infra-red data, and other parameters of the region under surveillance or of objects of interest within the region under surveillance. The objects of interest may include people, trees, animals, vehicles, etc. that may be monitored. The tamper-proof sensor assemblies 100 may be adapted to operate or be functional for a predefined time duration such as a few hours, a day, a week, etc. Alternatively, the tamper-proof sensor assemblies 100 may be adapted to monitor and collect data continuously.

**As** used herein, the term "control circuitry" and may be construed to encompass one or a combination of microprocessors, suitable logic, circuits, audio interfaces, visual interfaces, haptic interfaces, or the like. The control circuitry may include, but are not limited to a microcontroller, a Reduced Instruction Set Computing (RISC) processor, an Application-Specific Integrated Circuit (ASIC) processor, a Complex Instruction Set Computing (CISC) processor, a central processing unit (CPU), a graphics processing unit (GPU), a state machine, and/or other processing units or circuits. The control circuitry may also comprise suitable logic, circuits, interfaces, and/or code that may be configured to execute a set of instructions stored in a memory unit. The memory unit may include, but are not limited to, Electrically Erasable Programmable Read-only Memory (EEPROM), Random Access Memory (RAM), Read Only Memory (ROM), Hard Disk Drive (HDD), Flash memory, Solid-State Drive (SSD), and/or CPU cache memory.

**The** control circuitry further includes a communications unit configured to communicate with the microchip and other components of the system such as other sensors in the vicinity of the tamper-proof sensor assembly 100 and/or a computing device. The communications unit may transmit data to and receive data from the computing device via a communications network. The communications unit may be configured of, for example, a telematic transceiver (DCM), a mayday battery, a GPS, a data communication module ASSY, a telephone microphone ASSY, and a telephone antenna ASSY. The communications network may include, but is not limited to, a Wide Area Network (WAN), a cellular network, such as a 3G, 4G, or 5G network, an Internet-based mobile ad hoc networks (IMANET), etc. The communications network may also include wired media such as a wired network or direct-wired connection, and wireless media such as acoustic, radio frequency (RF), microwave, infrared (IR) and other wireless media. The computing device may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions.

The computing device may also be implemented as a personal computer including both laptop computer and non-laptop computer configurations. The computing device can also be any type of network computing device. The computing device can also be an automated system as described herein. The computing device may have additional features or functionality, and additional interfaces to facilitate communications between basic configuration and any devices and interfaces. For example, a bus/interface controller may be used to facilitate communications between a basic configuration and one or more data storage devices via a storage interface bus. Data storage devices may be removable storage devices, non-removable storage devices, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and non-volatile, removable, and non-removable media implemented in any method or technology for storage of information, such as computer readable instructions, data structures, program modules, or other data systems can also be used for data analysis.

**As** would be apparent to a person in the art, various working modifications may be made to the method in order to implement the inventive concept as taught herein.

Moreover, the actions of any flow diagram need not be implemented in the order shown; nor do all the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above regarding specific embodiments. However, the benefits, advantages, solutions to problems, and any component(s) that may cause any benefit, advantage, or solution to occur or become more pronounced are not to be construed as a critical, or essential feature or component of any or all the claims.

## Claims

1. A wall mount (101) for a tamper-proof sensor assembly (100), the wall mount comprising:
a wall plate housing (102) adapted to be removably mounted to a wall, the wall plate housing having:
at least one runner plate (103) disposed in a cutaway portion of the wall plate housing and connected to the wall plate housing using at least one frangible bridge (102a), the at least one runner plate affixed to the wall,
wherein upon exertion of a dismantling force on the wall plate housing, the at least one frangible bridge is adapted to break to separate the wall plate housing from the at least one runner plate such that the at least one runner plate remains affixed to the wall.

2. The wall mount (101) according to claim 1, wherein a rear housing (105) of the tamper-proof sensor assembly (100) is adapted to be mounted on the wall mount.

3. The wall mount (101) according to claim 1 or 2, wherein the rear housing (105) of the tamper-proof sensor assembly (100) is rotatable relative to the wall mount.

4. The wall mount (101) according to any preceding claim, wherein the at least one runner plate (103) has an arcuate outer profile.

5. The wall mount (101) according to claim 4, wherein the at least one runner plate (103) is disposed in the cutaway portion of the wall plate housing (102) such that at least one tamper arm (104) of the tamper-proof sensor assembly (100) engages a portion of the arcuate outer profile of the at least one runner plate.

6. The wall mount (101) according to any preceding claim, wherein the at least one runner plate (103) is disposed symmetrically about a central axis (X-X') passing through the wall mount (101), or wherein the at least one runner plate is disposed asymmetrically about a central axis (X-X') passing through the wall mount.

7. The wall mount (101) according to any preceding claim, wherein at least one of the wall plate housing (102), the at least one frangible bridge (102a), and the at least one runner plate (103) are made of a plastic material.

8. A tamper-proof sensor assembly (100) comprising:
a wall mount (101) comprising:
a wall plate housing (102) adapted to be removably mounted to a wall, the wall plate housing having:
at least one runner plate (103) disposed in a cutaway portion of the wall plate housing and connected to the wall plate housing using at least one frangible bridge (102a), the at least one runner plate affixed to the wall; and
a rear housing (105) adapted to be mounted on the wall mount such that the tamper-proof sensor assembly is rotatable relative to the wall mount; and
a front housing (106) removably attached to the rear housing to enclose at least one tamper arm (104) and control circuitry comprising at least one tamper switch (107),
wherein, upon assembling the tamper-proof sensor assembly, a first end of the at least one tamper arm is adapted to engage the at least one tamper switch and a second end of the at least one tamper arm is adapted to engage the at least one runner plate,
and wherein, upon tampering with the assembled tamper-proof sensor assembly, the at least one tamper arm disengages from the at least one tamper switch to trigger a notification generated by the control circuitry.

9. The tamper-proof sensor assembly (100) according to claim 8, wherein upon exertion of a dismantling force on the wall plate housing (102), the at least one frangible bridge (102a) is adapted to break to separate the wall plate housing from the at least one runner plate (103) such that the at least one runner plate remains affixed to the wall.

10. The tamper-proof sensor assembly (100) according to claim 8 or 9, wherein the first end of the at least one tamper arm (104) includes a slot adapted to seat the at least one tamper switch (107) and the second end of the at least one tamper arm protrudes from a portion of the rear housing (105) to engage the at least one runner plate (103).

11. The tamper-proof sensor assembly (100) according to any of claims 8 to 10, wherein during rotation of the tamper-proof sensor assembly, the second end of the at least one tamper arm (104) engages an arcuate outer profile of the at least one runner plate (103) from a first end to a second end of the at least one runner plate and vice versa.

12. The tamper-proof sensor assembly (100) according to any of claims 8 to 11, wherein upon assembling the tamper-proof sensor assembly (100), the at least one tamper arm (104) is inclined at an angle relative to the vertical axis (Y-Y').

13. The tamper-proof sensor assembly (100) according to any of claims 8 to 12, wherein the at least one runner plate (103) is disposed symmetrically about a central axis (X-X') passing through the wall mount (101), or wherein the at least one runner plate is disposed asymmetrically about the central axis (X-X') passing through the wall mount.

14. The tamper-proof sensor assembly (100) according to any of claims 8 to 13, wherein at least one of the wall plate housing (102), the at least one frangible bridge (102a), the at least one runner plate (103), the rear housing (105), and the front housing (106) are made of a plastic material.

15. The tamper-proof sensor assembly (100) according to any of claims 8 to 14, wherein the notification is at least one of an audio notification, a visual notification, and an audio-visual notification.
